# EUROPEAN PATENT SPECIFICATION

(11) **EP 2 478 230 B1**
(45) Date of publication and mention of the grant of the patent: **24.07.2019**
(21) Application number: 10817519.1
(22) Date of filing: 16.09.2010
(51) Int. Cl.: F16B 5/02, F16B 3/06

(54) **SYSTEM AND METHOD FOR FIXEDLY CONNECTING SHEETS**
SYSTEM UND VERFAHREN FÜR DIE STARRE VERBINDUNG VON TAFELN
SYSTÈME ET PROCÉDÉ POUR ASSEMBLER DES FEUILLES DE MANIÈRE FIXE

(30) Priority: 18.09.2009 SE 0950686
(43) Date of publication of application: 25.07.2012
(73) Proprietor: Expander System Sweden AB, 597 25 Åtvidaberg (SE)
(72) Inventor: CARLSSON, Anders, S-597 41 Åtvidaberg (SE)
(74) Representative: Zacco Sweden AB
(86) International application number: PCT/SE2010/050995
(87) International publication number: WO 2011/034494

(56) References cited:
- DE-A1- 3 816 523
- DE-A1-102007 044 404
- JP-A- 2003 314 513
- US-A- 1 120 368
- US-A- 3 618 992
- US-A- 4 985 979
- US-A- 5 193 956

## Description

### Technical field

This document relates to a system and a method for fixedly connecting sheets, e.g. sheets of metal. The fastener, system and method are particularly suitable for joining together sheets of metal for heavy duty applications, such as in heavy constructions (buildings, bridges etc.), heavy vehicles, ships and the like.

### Background

When joining together sheets of metal, e.g. sheets making up the hull of a ship, it is important that the sheets are tightly secured in order to prevent the sheets from moving relative one another.

Conventional fasteners, such as nut and bolt arrangements or rivets are used to fixate or clamp two or more sheets to each other, whereby a bolt or rivet of suitable dimensions is introduced through corresponding holes in the sheets and subsequently secured by nut and optionally one or more washers.

The conventional fasteners are adapted for transferring forces axially, as seen in the longitudinal direction of the bolt or rivet, and to clamp the metal sheets in their normal direction, hereinafter referred to as the axial direction. Radial forces, counteracting relative movement between the sheets in a direction parallel with the planes of the sheets, are provided by the friction between the sheets and between the bolt head, nut and/or washer and its associated sheet. This friction force is a function of the axial force provided by the fastener.

It is important to counteract both axial and radial relative movement between the sheets.

However, the holes in the sheets must also allow for a certain clearance in relation to the bolt, otherwise the bolt will not fit through the hole.

Radial relative movement between the sheets may cause fatigue fractures of the bolt or of the sheets, and also unthreading of the nut, especially when the arrangement is subjected to alternating load directions.

Hence, there is a need for a way to absorb the radial, or shearing, forces and thus to reduce the risk of fatigue fractures and unthreading of the nut, and to prevent macrosliding in the normal plane of the sheets. DE3816523 discloses a centering element which serves to connect two parts to be aligned with each other, exhibiting a double-cone part penetrated by a clamping screw and comprising two cone sleeves.

Another connector solution is seen in JP2003314513, wherein two metal panes are connected by a bolt and a nut, wherein a positioning member presents a tapered face on its outer circumferential face for engaging a corresponding tapered face on a receiving seat.

### Summary

It is hence an object of the present disclosure to overcome or alleviate at least some of the problems discussed above.

The invention is defined by the appended independent claims, with embodiments being set forth in the dependent claims, in the attached drawings and in the following description.

According to a first aspect of the present solution there is provided a joint system for joining together at least two sheet portions according to claim 1, comprising a first sheet portion presenting a first recess; a second sheet portion, overlapping the first sheet portion, and presenting a second recess, the first and second recesses being substantially aligned; and a fastener received in said first and second recesses. The fastener is a mainly radially operating fastener.

The mainly radially operating fastener comprises: a guide part having an outer substantially conical surface; an expander sleeve, having an inner substantially conical surface, adapted to cooperate with the outer conical surface of the guide part, and an outer surface adapted for engaging a radially adjacent surface of at least one of the first and second recesses; and a clamping arrangement, arranged to provide an axial relative movement between the guide part and the expander sleeve, thus causing the expander sleeve to expand radially.

The mainly radially operating fastener further includes a second outer conical surface and a second expander sleeve operating in opposite direction to said first expander sleeve. The first expander sleeve may be adapted for interaction only with the first recess, and wherein the second expander sleeve is adapted for interaction only with the second recess.

The joint system further comprises a mainly axially operating fastener.

A radially adjacent surface may be the cylindrical surface of a through hole or a blind hole.

The term "conical" is not limited to linearly conical devices, and thus does not exclude the possibility of the conical surface being somewhat convex or concave.

By "axial" is meant along the axis of the guide part and the expander sleeve, thus an "axial relative movement" refers to the movement of the guide part and/or the expander sleeve relative to one another along their axis.

By "radial" is meant in a direction substantially in the plane in which the sheets overlap. The "radial" direction is thus substantially perpendicular to the "axial" direction.

By " mainly radially operating fastener" is understood a fastener providing it's main force in one or more radial directions, e.g. in the plane of a sheet. Such a fastener may however also, via friction, provide an axial force.

By "expand radially" is meant that some portion of the outer surface of the expander sleeve may be moved outwards from the axis so as to eliminate or reduce a play between the outer surface of the expander sleeve and the radially adjacent surface.

By "mainly axially operating fastener" is understood a fastener providing it's main force in a substantially axial direction. Such a fastener may also, via friction, provide forces in one or more radial directions.

By using an expander sleeve arrangement, the play between the outer surface of the fastener and the radially adjacent surface may be eliminated, thus counteracting a relative radial movement between the sheets, and thereby further fixating the sheets relative one another.

The inclusion of a second outer conical surface allows for the use of expander sleeves from opposite sides of the sheets, which for example has the advantage of allowing a reduced hole diameter for any given desireable gradient or angle of inclination, of the first and second conical surfaces.

That the first expander sleeve is adapeted for interaction only with the first recess and the second expander sleeve only with the second recess has the advantage of compensating for alignment errors between the recesses, and also for diameter variances and shape differences between the holes.

The use of the mainly axially operating fastener has the advantage of effectively counteracting both axial and radial relative movement between the sheets.

At least one of the recesses may be a through hole.

In this case the "radially adjacent surface" may be referred to as a "hole surface" which would then correspond to the cylindrical walls, defining the through hole, substantially perpendicular to the direction in which the sheets overlap.

The outer surface may be substantially cylindrical.

By "substantially cylindrical" is meant substantially defining the shape of a cylinder, i.e a tube with a substantially uniform cross section along its axis.

This has the advatage of the outer surface of the expander sleeve corresponding to a substantially cylindrical hole surface in the sheet.

The first and second outer conical surfaces may form part of the same guide part or different guide parts.

The first expander sleeve may have a length adapted to correspond to a thickness of the first sheet portion.

The second expander sleeve may have a lenght corresponding to a thickness of the second sheet portion.

This has the advantage of providing effective interaction of the respective expander sleeve with the corresponding radially adjacent surface of the sheet portionso as to fill or reduce any play there between. It also allows for adapting the expander sleeves to the characteristics of the respective sheet.

The length of the first expander sleeve may be different from the length of the second expander sleeve.

This allows for adapting the sleeves to sheets of different thickness.

The length of the first outer conical surface may be different from the length of the second outer conical surface.

This has the adavtage that the respective first and second conical surfaces may be adapted to corresopond to the thickness of the first and second sheets.

The guide part and the clamping arrangement may form separate parts.

According to the invention, the guide part is integrated with the clamping arrangement.

This may be an effective solution in terms of cost, and facilitate handling of the parts.

The clamping arrangement may include bolt and a nut, and optionally one or more washers.

The clamping arrangement may include a pin, which is threaded to receive respective nuts at its ends.

The use of a nut and bolt arrangement may be convenient in that their dimensions may be adapted for use with standard tools, such as wrenches etc.

The joint system may comprise at least two mainly radially operating fasteners and at least two mainly axially operating fasteners.

The joint system may further comprise a third sheet portion.

At least one of the mainly axially operating fasteners may engage all three sheet portions.

At least one of the mainly radially operating fasteners may engage the first and second sheet portions.

At least one of the mainly radially operating fasteners may engage the second and third sheet portions.

At least one of the mainly radially operating fasteners may engage all three sheet portions.

According to a second aspect of the present solution, a method for joining together at least two sheet portions according to claim 13 is provided.

The mainly radially operating fastener may be arranged to only engage said first and second sheet portions.

The mainly radially operating fastener may be arranged to engage said first, second and third sheet portions.

Other objectives, features and advantages of the present solution will appear from the following detailed disclosure, from the attached dependent claims as well as from the drawings.

### Brief Description of the Drawings

Embodiments of the present solution will now be described, by way of example, with reference to the accompanying schematic drawings in which.
Fig. 1 is a schematic top view of a sheet metal sheet provided with fasteners.
Fig. 2 is a cross sectional view along the line A-A of Fig. 1.
Fig. 3 is an enlarged view of section B of Fig. 2.
Fig. 4 is an enlarged view of section C of Fig. 2.
Fig. 5 is a schematic top view of an embodiment of a sheet metal sheet provided with fasteners.
Fig. 6 is a cross sectional view along the line A-A of Fig. 5.
Fig. 7 is a cross sectional view along the line B-B of Fig. 5.
Fig. 8 is an enlarged view of section C of Fig. 6.
Fig. 9 is an enlarged view of section D of Fig. 5.
Fig. 10 is a perspective view of a fastener.
Fig. 11 is a schematic top view of an embodiment of a sheet metal sheet provided with fasteners.
Fig. 12 is a cross sectional view along the line A-A of Fig. 11.
Fig. 13 is a cross sectional view along the line B-B of Fig. 11.
Fig. 14 is a cross sectional view of a joint system with a fastener joining together three sheet metal sheets.
Fig. 15 is a schematic perspective view of the fastener in Fig. 14.

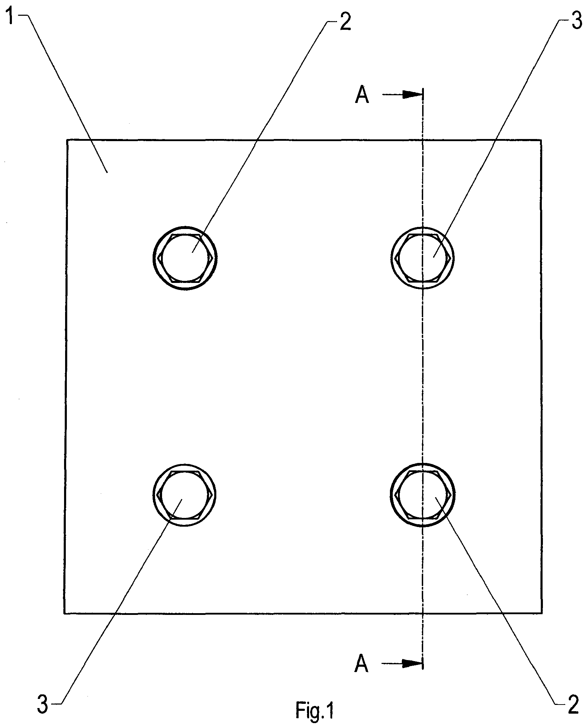

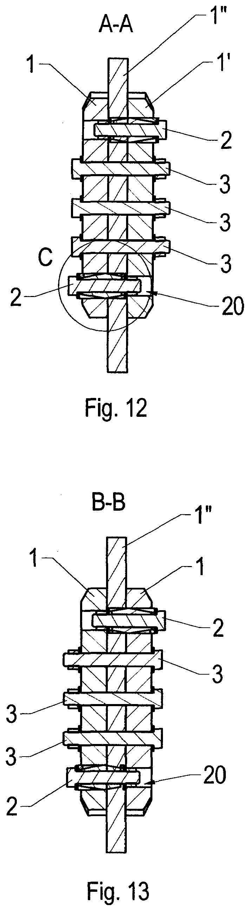

The examples shown in figures 1-13 do not show a clamping arrangement comprising a through going pin forming an integrated part with the guide part as defined by claim 1.

### Description of Embodiments

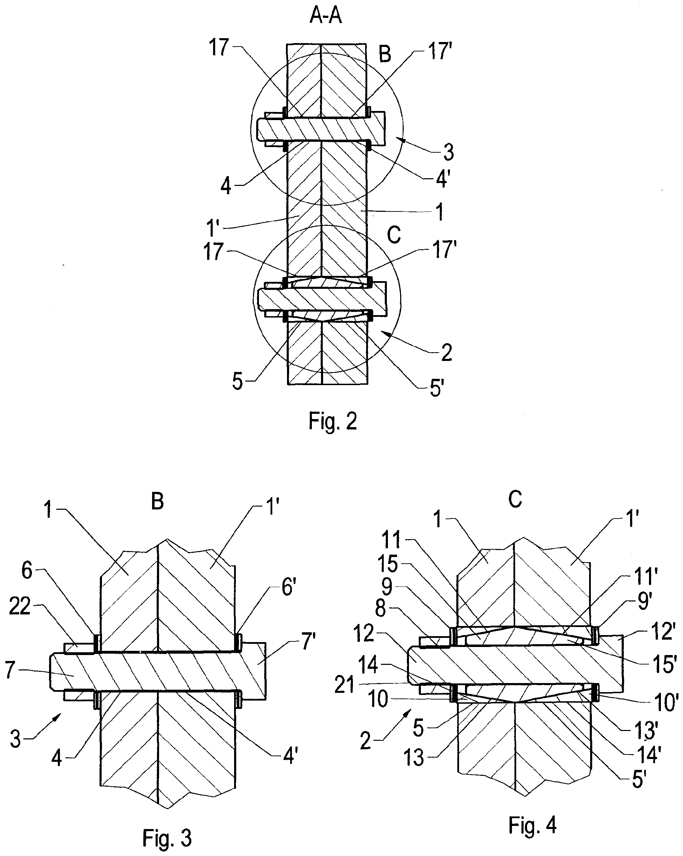

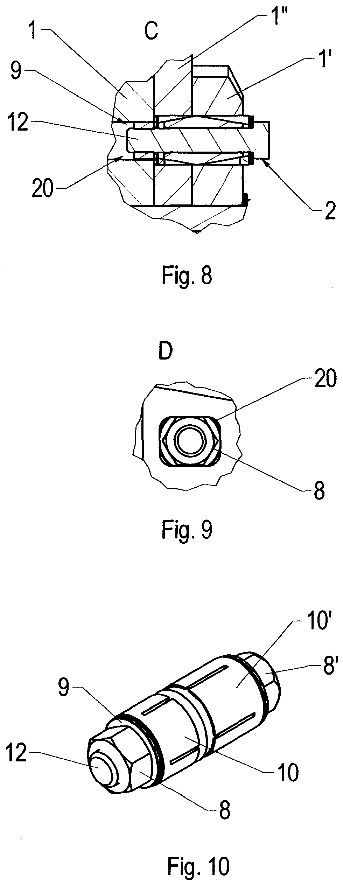

Fig. 1 illustrates a sheet metal sheet portion 1, hereinafter called a sheet, provided with fasteners of two different types, the first fastener 2 is a fastener of the type illustrated in Figs 4 and 10, hereinafter called an expander bolt, and the second fastener 3 is a conventional fastener, arranged to operate mainly axially for providing an axial clamping of the sheets.

The conventional fastener is here illustrated in the form of a nut and bolt arrangment shown in Fig. 3, where the nut, bolt head and washers are arranged to interact with the main surfaces of the respective sheet. The washers, and optionally also the nut and/or bolt head have a diameter which is larger than the diameter of the recesses 4, 4', in which the conventional fastener 3 is arranged.

The recesses 4, 4', 5, 5' may be through holes as shown in Figs 2-4.

In one embodiment, the first sheet portion 1, as shown in Fig. 2, is provided with through holes 4 and 5, corresponding to through holes 4' and 5' provided in an adjacent second sheet portion 1'. The through holes are adapted for, that is, are formed to allow for, the introduction of a respective fastener, e.g. a bolt, a pin, a rivet or an expander bolt.

At least one of the holes 4, 4', 5, 5' can be replaced with a blind hole, provided that the blind hole is shaped and adapted for interaction with a nut or bolt head, to prevent its rotation, or provided with threads to interact with a threaded portion of a bolt.

In the embodiment shown in Figs 1 and 2, the sheets 1 and 1' are provided with two expander bolts 2 and two conventional bolts 3, that is an equal number of each kind of fastener.

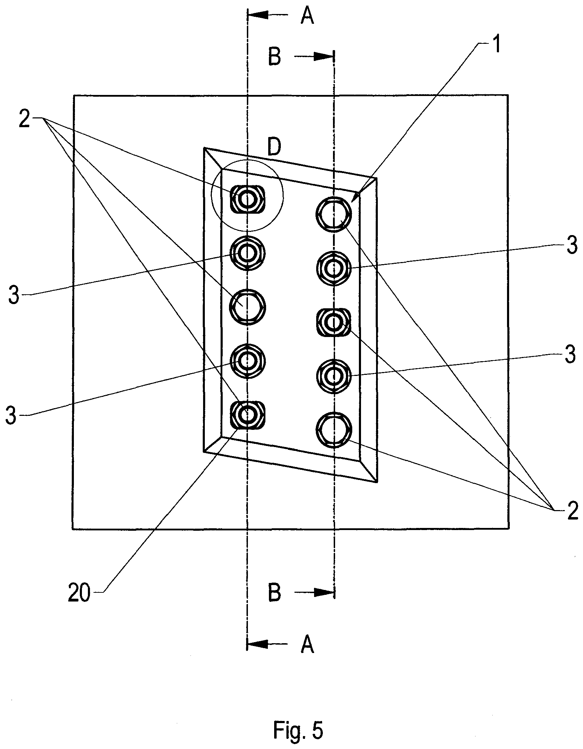

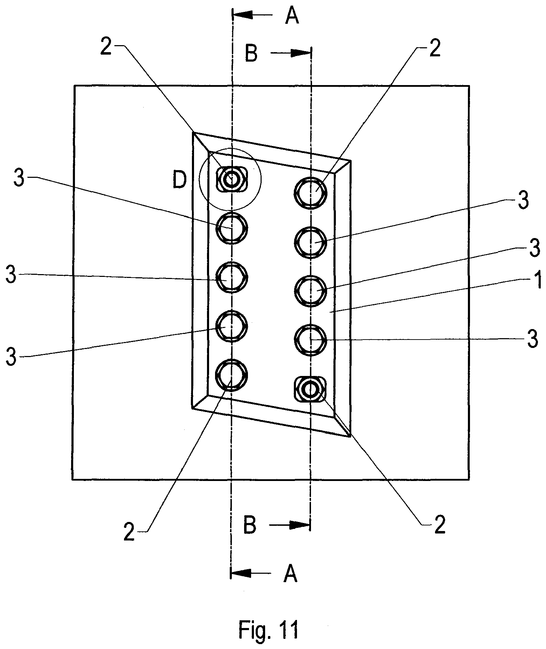

Further embodiments shown in Fig. 5 and Fig. 11 illustrate that the number of expander bolts relative to the number of conventional-type fasteners may vary.

Fig. 2 illustrates the sheets 1 and 1' wherein fasteners 3 and 2 have been inserted through the holes 4, 4', 5 and 5' respectively.

Fig. 3 illustrates a fastener 3, which operates mainly axially, e.g. a bolt 7, inserted through the holes 4, 4' of the sheets 1, 1'. The bolt 7 is secured on the outer surface of the sheet 1' by its head 7', and at the other surface of the sheet 1, by a nut 22. A first washer 6 is provided between the sheet 1 and the nut 22, and a second washer 6' is provided between the head portion 7' and the sheet 1'. The nut, bolt, and optionally washers, provide an axial clamping force on the sheets.

Fig. 4 illustrates and expander bolt 2, inserted through the holes 5, 5' of the sheets 1, 1'. The expander bolt 2 comprises an axially clamping arrangement, which may comprise a bolt 12, a nut 8, and washers 9, 9', and a guide part 15, and which is arranged to provide an axial force operating only on the parts of the expander bolt. The bolt head 12', the washers 9, 9' and the nut 8 present a smaller diameter than the corresponding holes 5, 5', such that no axial clamping force is provided on the sheets.

The expander bolt further comprises a guide part 15, which is provided with a first outer conical surface 11. An expander sleeve 10 is adapted to cooperate with the outer conical surface 11 of the guide part 15, and is provided with a corresponding, inner conical surface 13. The outer surface of the sleeve 10 may be substantially cylindrical and adapted to fit into the through holes 5, 5' of the sheets 1, 1'. The length of the sleeve 10 may be adapted to correspond to the thickness of the sheet 1. In particular, it may present a length in the axial direction, which is equal to or less than the thickness of the corresponding sheet.

The guide part 15 may further be provided with a second outer conical surface 11' and a second expander sleeve 10' operating in opposite direction to first expander sleeve 10.

The guide part may be provided in one piece with the bolt, or as a separate part.

The expander sleeves 10, 10' may present at least one axial slit, which facilitates its radial expansion.

A respective washer 9', 9 may be provided to form an interface between the bolt head 12' and its associated expander sleeve 10 and between the nut 8 and its associated expander sleeve 10'.

Still with reference to Fig 4, the operation of the expander bolt will now be described.

Holes 5, 5' of two sheets 1, 1' to be joined are aligned. An expander bolt 2 with a guide part 15, expander sleeves 10, 10' and washers 9, 9' mounted thereon is inserted through the holes 5, 5', and the expander sleeves are axially aligned with their associated sheets' thickness.

The nut 8 and bolt 12' are then activated to compress the expander bolt, thereby causing the expander sleeves 10, 10' to move axially relative to the guide part or guide parts.

With the expander sleeves 10, 10' being clamped between the bolt 12 and the respective hole surface, play-free connections are created between the bolt and each of the hole surfaces, counteracting radial relative movement between the sheets.

One or more conventional fasteners may supplement the expander bolt or expander bolts 2 by clamping the sheets in the axial direction.

Figs 5-7 illustrate an alternative arrangement where three overlapping sheets 1, 1', 1" are joined together by means of a plurality of expander bolts 2 and bolts 3.

Fig. 5 is a schematic top view of the arrangement.

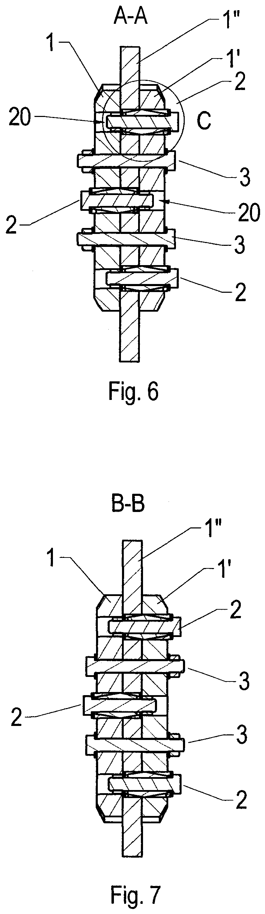

Figs 6 and 7 are cross sectional views along the respective lines A-A, and B-B as shown in Fig. 5, illustrating how expander bolts 2 may be used to join a first, second and third sheet 1, 1', 1", using a combination of conventional fasteners 3 and expander bolts 2.

In this embodiment the conventional fasteners may be arranged to extend through all three sheets 1, 1', 1", while the expander bolts 2 may be arranged to extend only through two adjacent sheets. Specifically, while some expander bolts 2 extend through the second sheet 1' and the third, intermediate, sheet 1", as shown in Figs 6 and 8, other expander bolts 2 extend through the first sheet 1 and the third, intermediate, sheet 1".

As is shown in Figs 8 and 9, the nut 8 or bolt head 12' of the expander bolt 2 may be embedded into a recess 20 of the first sheet 1. The recess may be shaped to counteract rotation of the nut or bolt head, which may facilitate the assembly and activation of the expander bolt 2.

Fig. 10 illustrates an expander bolt 2, comprising a bolt 12, a nut 8, a washer 9 and an expander sleeve 10, and a second expander sleeve 10' and a second nut 8'.

Figs 11-13 illustrate yet another embodiment of arranging the expander bolts 2 and conventional fasteners 3 to secure together three sheets. In this embodiment, a higher number of conventional fasteners are used than the number of expander bolts 2.

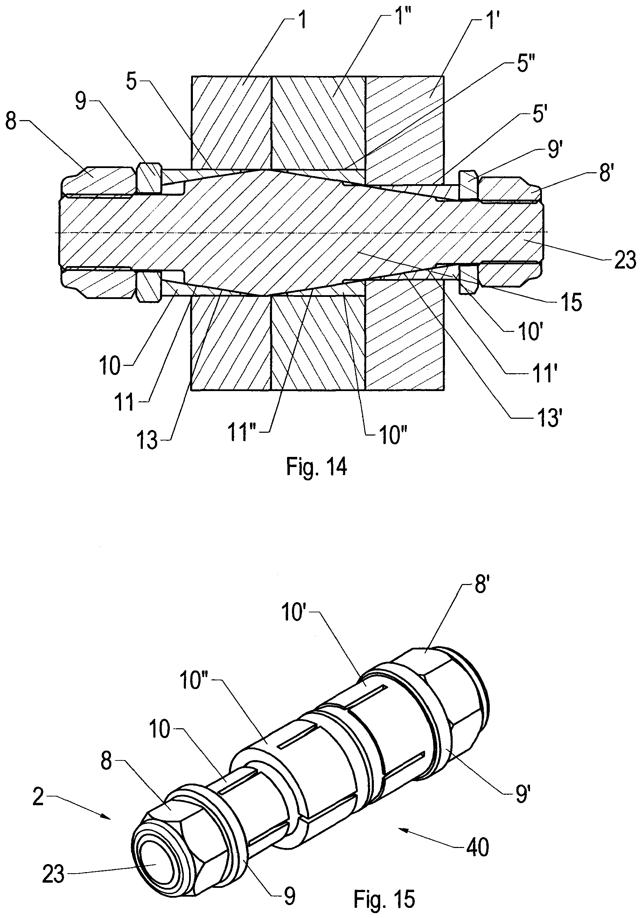

Fig. 14 is a schematic sectional view of a joint system joining together three sheet portions 1, 1', 1". The system comprises an expander bolt 2 introduced through aligned recesses in the form of through holes 5, 5', 5" of the respective sheets 1, 1', 1". The holes 5, 5" of the sheets 1, 1 " have substantially the same diameter, whereas the hole 5' of the sheet 1' has a smaller diameter.

The expander bolt 2 further comprises three expander sleeves 10, 10', 10" with inner conical surfaces 13, 13', 13" adapted for cooperation with three conical outer surfaces 11, 11', 11 ", of a guide part 15. There is also provided a clamping arrangement comprising a through going pin 23, here forming an integrated part with the guide part 15, arranged for connection with a nut (8, 8') in each end thereof by means of threading. The clamping arrangement further comprises washers 9, 9'. A main purpose of the clamping arrangement is to provide an axial movement between the respective inner conical surfaces 13, 13', 13" of the expander sleeves (10, 10', 10") and the corresponding outer conical surfaces 11, 11', 11" of the guide part 15.

To join the sheet portions (1, 1', 1") the expander sleeve 10" is placed around the guide part 15. The guide part 15 is then inserted in to the hole 5, further through the hole 5" and in to the hole 5', such as to place the expander sleeve 10" in a position where it's end portion abuts the sheet 1 '. The expander sleeve 10" may then be secured in its position by tightening of the nut 8' wherein the abutment of the expander sleeve 10" with the sheet 1'cooperates with the nut 8' to clamp the expander sleeve 10 " in a position such that the outer conical surface 11" and the inner conical surface 13" cooperate to eliminate, or reduce, any play between the expander sleeve 10" and the radially adjacent surface of the recess 5" of the sheet 1 ".

The expander sleeve 10 may then be placed in the hole 5 of the sheet 1, and accordingly be secured in a gap eliminating position, by activation of the clamping arrangement by tightening of the nut 8 to provide an axial movement of the expander sleeve 10 relative the outer conical surface 11, causing the expander sleeve 10 to expand radially, so as to eliminate any gap between its outer surface and the inner surface of the recess 5.

The nut 8' and the corresponding washer 9' are then removed and the expander sleeve 10' is placed around the guide part 15, inserted in to the hole 5', and secured in its respective gap eliminating position by retightening of the nut 8' acting via the washer 9'.

As can be seen in Fig. 4, an expander bolt having multiple expander sleeves may be arranged so that each expander sleeve only interacts with one corresponding sheet.This has the advantage of compensating for alignment errors between the recesses, and also for diameter variances and shape differences between the holes.

In one embodiment, the outer expander sleeves 10, 10', may be shorter than the respective thickness of the corresponding sheets 1, 1'. The clamping arrangement may then be arranged so as not to risk abutting the sheets surface when activated. This may be achieved by the using a nut and washer having a smaller outer diameter than the corresponding expander sleeve.

The guide part 15 and the pin 12 may be separate parts. The guide part may have a cylindrical hole along its axis to slidingly receive such a separate pin.

## Claims

1. A joint system for joining together at least two sheet portions, comprising:
a first sheet portion (1) presenting a first recess (5);
a second sheet portion (1'), overlapping the first sheet portion (1), and presenting a second recess (5'),
the first and second recesses (5,5') being substantially aligned; and
a fastener (2) received in said first and second recesses (5,5');
wherein the fastener (2) is a mainly radially operating fastener, wherein the mainly radially operating fastener comprises:
a guide part (15) having an outer substantially conical surface (11);
an expander sleeve (10) having an inner substantially conical surface (13), adapted to cooperate with the outer conical surface (11) of the guide part (15), and an outer surface (14) adapted for engaging a radially adjacent surface (17) of at least one of the first and second recesses (5,5'); and
a clamping arrangement, arranged to provide an axial relative movement between the guide part (15) and the expander sleeve (10), thus causing the expander sleeve (10) to expand radially,
wherein the mainly radially operating fastener (2) further includes a second outer conical surface (11') and a second expander sleeve (10') operating in opposite direction to said first expander sleeve (10),
wherein the first expander sleeve (10) is adapted for interaction only with the first recess (5), and wherein the second expander sleeve (10') is adapted for interaction only with the second recess (5').
**characterised in that** the joint system further comprises a mainly axially operating fastener (3), and that said the guide part (15) is integrated with the clamping arrangement, wherein the clamping arrangement comprises a through going pin (23) forming an integrated part with the guide part .

2. The joint system according to claim 1, wherein at least one of the recesses (5, 5') is a through hole.

3. The joint system according to any one of the preceeding claims, wherein the outer surface (14) is substantially cylindrical.

4. The joint system according to claim 1, wherein the first expander sleeve (10) has a length adapted to correspond to a thickness of the first sheet portion(1).

5. The joint system according to claim 4, wherein the second expander sleeve (10') has a length corresponding to a thickness of the second sheet portion (1').

6. The joint system according to any one of claims 4-5, wherein the length of the first expander sleeve (10) is different from the length of the second expander sleeve (10').

7. The joint system according to any one of claim 4-6, wherein the length of the first outer conical surface (11) is different from the length of the second outer conical surface (11').

8. The joint system according to any one of the preceeding claims, wherein the guide part (15) and the clamping arrangement form separate parts.

9. The joint system according to any of the preceeding claims, wherein the clamping arrangement includes bolt (12) and a nut (8), and optionally one or more washers (9).

10. The joint system according to any one of claims 1-9, wherein the clamping arrangement includes a pin (23), which is threaded to receive respective nuts at its ends.

11. The joint system according to any one of the preceeding claims, comprising at least two mainly radially operating fasteners (2) and at least two mainly axially operating fasteners (3).

12. The joint system according to any one of the preceeding claims, further comprising a third sheet portion (1").

13. A method for joining together at least two sheet portions, the method comprising:
providing at least two sheet portions and using the joint system according to any of the claims 1-12, to join these sheet portions together.

## Patentansprüche

1. Verbindungssystem zum Verbinden von mindestens zwei Blechteilen, umfassend:
ein erstes Blechteil (1), das eine erste Aussparung (5) darstellt;
ein zweites Blechteil (1'), das den ersten Blechteil (1) überlappt und eine zweite Aussparung (5') darstellt,
wobei die erste und die zweite Aussparung (5,5') im Wesentlichen miteinander fluchten; und
ein Befestigungsmittel (2), das in der ersten und der zweiten Aussparung (5,5') aufgenommen ist;
wobei das Befestigungsmittel (2) ein hauptsächlich radial betriebenes Befestigungsmittel ist, wobei das hauptsächlich radial betriebene Befestigungsmittel umfasst:
ein Führungsteil (15), das eine im Wesentlichen konische Außenfläche (11) aufweist;
eine Expander-Hülse (10), die eine im Wesentlichen konische Innenfläche (13), die dazu angepasst ist, mit der konischen Außenfläche (11) des Führungsteils (15) zusammenzuwirken, und eine Außenfläche (14) aufweist, die dazu angepasst ist, mit einer radial benachbarten Fläche (17) zumindest einer der ersten und zweiten Aussparung (5,5') im Eingriff zu gelangen; und
eine Klemmanordnung, die angeordnet ist, um eine axiale relative Bewegung zwischen dem Führungsteil (15) und der Expander-Hülse (10) bereitzustellen, wodurch bewirkt wird, dass die Expander-Hülse (10) radial expandiert,
wobei das hauptsächlich radial betriebene Befestigungsmittel (2) ferner eine zweite konische Außenfläche (11') und eine zweite Expander-Hülse (10') aufweist, die zur ersten Expander-Hülse (10) in entgegengesetzter Richtung arbeitet,
wobei die erste Expander-Hülse (10) zum Zusammenwirken lediglich mit der ersten Aussparung (5) angepasst ist, und wobei die zweite Expander-Hülse (10') zum Zusammenwirken lediglich mit der zweiten Aussparung (5') angepasst ist,
**dadurch gekennzeichnet, dass**
das Verbindungssystem ferner ein hauptsächlich axial betriebenes Befestigungsmittel (3) umfasst, und dass das Führungsteil (15) mit der Klemmanordnung integriert ist, wobei die Klemmanordnung einen durchgehenden Zapfen (23) umfasst, der mit dem Führungsteil ein einstückiges Teil bildet.

2. Verbindungssystem nach Anspruch 1, wobei mindestens eine der Aussparungen (5, 5') ein Durchgangsloch ist.

3. Verbindungssystem nach einem der vorgehenden Ansprüche, wobei die Außenfläche (14) im Wesentlichen zylindrisch ist.

4. Verbindungssystem nach Anspruch 1, wobei die erste Expander-Hülse (10) eine Länge aufweist, die dazu angepasst ist, um einer Dicke des ersten Blechteils (1) zu entsprechen.

5. Verbindungssystem nach Anspruch 4, wobei die zweite Expander-Hülse (10') eine Länge aufweist, die einer Dicke des zweiten Blechteils (1') entspricht.

6. Verbindungssystem nach einem der Ansprüche 4-5, wobei sich die Länge der ersten Expander-Hülse (10) von der Länge der zweiten Expander-Hülse (10') unterscheidet.

7. Verbindungssystem nach einem der Ansprüche 4-6, wobei sich die Länge der ersten konischen Außenfläche (11) von der Länge der zweiten konischen Außenfläche (11') unterscheidet.

8. Verbindungssystem nach einem der vorgehenden Ansprüche, wobei das Führungsteil (15) und die Klemmanordnung getrennte Teile bilden.

9. Verbindungssystem nach einem der vorgehenden Ansprüche, wobei die Klemmanordnung eine Schraube (12) und Mutter (8) und wahlweise eine oder mehrere Unterlegscheiben (9) umfasst.

10. Verbindungssystem nach einem der Ansprüche 1-9, wobei die Klemmanordnung einen Zapfen (23) aufweist, der mit einem Gewinde zur Aufnahme von jeweiligen Muttern an seinen Enden versehen ist.

11. Verbindungssystem nach einem der vorgehenden Ansprüche, umfassend mindestens zwei hauptsächlich radial betriebene Befestigungsmittel (2) und mindestens zwei hauptsächlich axial betriebene Befestigungsmittel (3).

12. Verbindungssystem nach einem der vorgehenden Ansprüche, ferner umfassend ein drittes Blechteil (1").

13. Verfahren zum Verbinden von mindestens zwei Blechteilen, wobei das Verfahren umfasst: Bereitstellen von mindestens zwei Blechteilen und Verwendung des Verbindungssystems nach einem der Ansprüche 1-12 zum Verbinden dieser Blechteile.

## Revendications

1. Système de joint pour assembler au moins deux parties de feuille, comprenant :
une première partie de feuille (1) présentant un premier évidement (5) ;
une deuxième partie de feuille (1') chevauchant la première partie de feuille (1) et présentant un deuxième évidement (5'),
les premier et deuxième évidements (5,5') étant essentiellement alignés ; et
une attache (2) reçue dans lesdits premier et deuxième évidements (5,5') ;
dans lequel l'attache (2) est une attache fonctionnant principalement de manière radiale, l'attache fonctionnant principalement de manière radiale comprenant :
une partie de guidage (15) ayant une surface extérieure essentiellement conique (11) ;
un manchon à expansion (10) ayant une surface intérieure essentiellement conique (13) adaptée pour coopérer avec la surface conique extérieure (11) de la partie de guidage (15), et une surface extérieure (14) adaptée pour venir en prise avec une surface radialement adjacente (17) d'au moins l'un des premier et deuxième évidements (5,5') ; et
un agencement de serrage, agencé pour fournir un mouvement relatif axial entre la partie de guidage (15) et le manchon à expansion (10), entraînant ainsi la dilatation radiale du manchon à expansion (10),
l'attache fonctionnant principalement de manière radiale (2) comprenant en outre une deuxième surface conique extérieure (11') et un deuxième manchon à expansion (10') fonctionnant dans sens opposé audit premier manchon à expansion (10),
le premier manchon à expansion (10) étant adapté pour une interaction uniquement avec le premier évidement (5), et le deuxième manchon à expansion (10') étant adapté pour une interaction uniquement avec le deuxième évidement (5'),
**caractérisé en ce que**
le système de joint comprend en outre une attache fonctionnant principalement de manière axiale (3), et que ladite partie de guidage (15) est intégrée avec l'agencement de serrage, dans lequel l'agencement de serrage comprend une broche traversante (23) faisant partie intégrée avec la partie de guidage.

2. Système de joint selon la revendication 1, dans lequel au moins l'un des évidements (5, 5') est un trou traversant.

3. Système de joint selon l'une quelconque des revendications précédentes, dans lequel la surface extérieure (14) est essentiellement cylindrique.

4. Système de joint selon la revendication 1, dans lequel le premier manchon à expansion (10) présente une longueur adaptée pour correspondre à une épaisseur de la première partie de feuille (1).

5. Système de joint selon la revendication 4, dans lequel le deuxième manchon à expansion (10') présente une longueur correspondant à une épaisseur de la deuxième partie en feuille (1').

6. Système de joint selon l'une quelconque des revendications 4 à 5, dans lequel la longueur du premier manchon à expansion (10) est différente de la longueur du deuxième manchon d'élargissement (10').

7. Système de joint selon l'une quelconque des revendications 4 à 6, dans lequel la longueur de la première surface conique extérieure (11) est différente de la longueur de la deuxième surface conique extérieure (11').

8. Système de jonction selon l'une quelconque des revendications précédentes, dans lequel la partie de guidage (15) et l'agencement de serrage forment des pièces séparées.

9. Système de joint selon l'une quelconque des revendications précédentes, dans lequel l'agencement de serrage comprend un boulon (12) et un écrou (8) et éventuellement une ou plusieurs rondelles (9).

10. Système de joint selon l'une quelconque des revendications 1 à 9, dans lequel l'agencement de serrage comprend une broche (23) qui est filetée pour recevoir des écrous respectifs à ses extrémités.

11. Système de joint selon l'une quelconque des revendications précédentes, comprenant au moins deux attaches fonctionnant principalement de manière radiale (2) et au moins deux attaches fonctionnant principalement de manière axiale (3).

12. Système de joint selon l'une quelconque des revendications précédentes, comprenant en outre une troisième partie de feuille (1 ").

13. Procédé pour assembler au moins deux parties de feuille, le procédé comprenant: la fourniture d'au moins deux parties de feuille et utilisant le système de joint selon l'une quelconque des revendications 1 à 12, pour assembler ces parties de feuille.
